# EUROPÄISCHE PATENTSCHRIFT

(11) **EP 0 374 578 B1**
(45) Veröffentlichungstag und Bekanntmachung des Hinweises auf die Patenterteilung: **23.03.1994**
(21) Anmeldenummer: 89122400.8
(22) Anmeldetag: 05.12.1989
(51) Int. Cl.: H04L 12/56

(54) **Modular erweiterbares digitales einstufiges Koppelnetz in ATM (Asynchronus Transfer Mode) Technik für eine schnelle paketvermittelte Informationsübertragung**
Modular expandable single stage digital ATM switching network for high speed packet-switched information transfer
Réseau de commutation numérique à technique ATM (Asynchronous Transfer Mode) extensible par modules pour transmission d'information de paquets commutés à grande vitesse

(30) Priorität: 23.12.1988 DE 3843724
(43) Veröffentlichungstag der Anmeldung: 27.06.1990
(73) Patentinhaber: SIEMENS AKTIENGESELLSCHAFT, 80333 München (DE)
(72) Erfinder: Lobjinski, Manfred, Dr., D-8000 München 80 (DE); Horn, Michael, Dipl.-Ing., D-8000 München 90 (DE); Hinterberger, Christian, Dipl.-Ing., W-8150 Holzkirchen (DE)

(56) Entgegenhaltungen:
- EP-A- 0 256 702
- EP-A- 0 292 962

## Beschreibung

Die vorliegende Erfindung bezieht sich auf ein modular erweiterbares digitales einstufiges Koppelnetz in ATM (Asynchronous Transfer Mode) -Technik für eine schnelle paketvermittelte Informationsübertragung, mit zwei Typen von vollvermittelnden Koppel-Moduln, die jeweils mit einer Vielzahl N von Ersteingängen, einer Vielzahl N x L von Erweiterungseingängen, einer Vielzahl N bzw. N x L von Erstausgängen und einer Vielzahl N von Erweiterungsausgängen versehen sind, wobei die Koppel-Moduln matrixförmig derart angeordnet sind, daß in der letzten Zeile der Matrix ausschließlich Grund-Moduln und in allen vorhergehenden Zeilen ausschließlich Erweiterungs-Moduln angeordnet sind, wobei die Erweiterungsausgänge der Koppel-Moduln jeweils mit den Ersteingängen der Koppel-Moduln in der folgenden Spalte verbunden sind und die Erstausgänge der Erweiterungs-Moduln jeweils mit den Erweiterungseingängen der Koppel-Moduln in der folgenden Zeile verbunden sind, wobei die Koppel-Moduln jeweils ersteingangsseitig zum Zwecke einer Wegauswahl ein Kopfinformations-Filter aufweisen und die Grund-Moduln jeweils eine Speicherfunktion (FIFO = First In/First Out) enthalten.

Ein zentrales Element zukünftiger ATM-Breitbandnetze ist der Vermittlungknoten. Da sich die notwendige Größe von Vermittlungsknoten durch wachsenden Verkehr und neue Anwendungen ändern kann, besteht die Forderung nach einer einfachen Erweiterbarkeit von Vermittlungsknoten.

Ein Lösungsvorschlag zum modularen Aufbau eines Vermittlungsknotens ("KO-Switch") ist in "IEEE Journal on selected areas in communications", vol. SAC-5, No. 8, October 1987, S. 1274-1283 beschrieben. Dieser Vorschlag wir in der folgenden Beschreibung mit dem Koppelnetz gemäß der Erfindung verglichen.

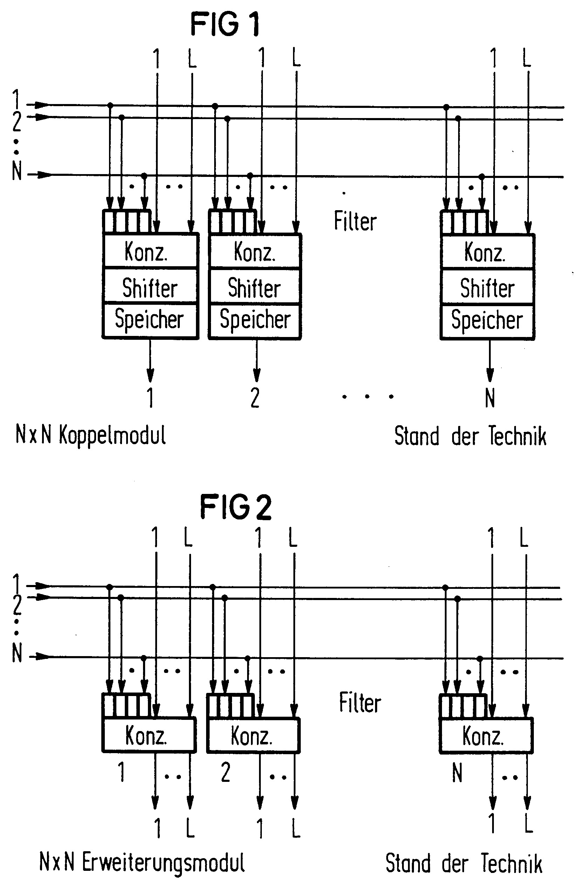

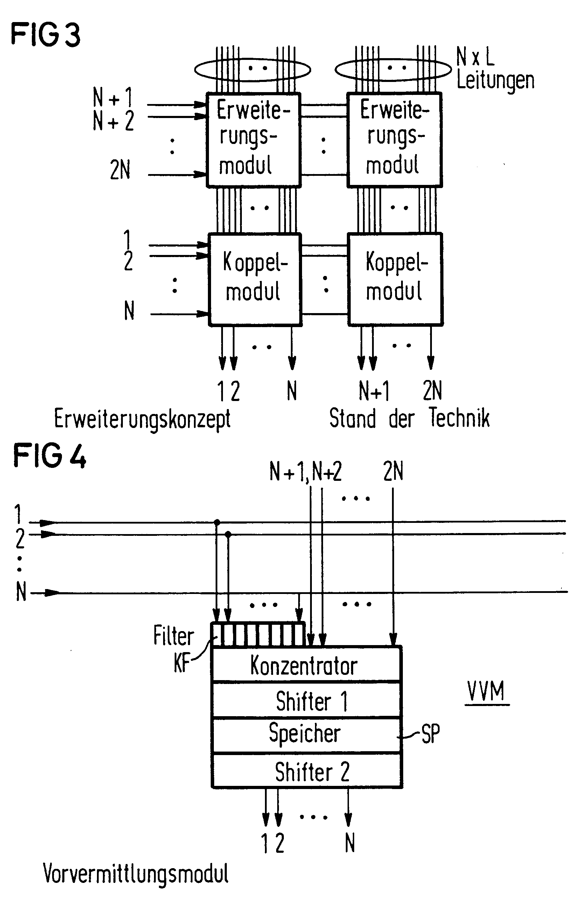

Das bekannte Erweiterungskonzept basiert auf dem sog. KO-Switch als Beispiel für einen Breitbandvermittlungsknoten. Ein N x N Koppel-Modul (Fig. 1) besteht dabei aus N Bus-Schnittstellen (eine für jeden Ausgang), die jeweils ein Filter, einen Konzentrator, einen Shifter und einen Speicher beinhalten. Angeschlossen sind N Leitungen. Zusätzlich sind N x L Erweiterungseingänge, die an den Konzentrator führen, vorgesehen. Bei einer Erweiterung auf 2N Ein- und Ausgänge ist zusätzlich ein weiterer derartiger Koppel-Modul erforderlich. Außerdem sind zwei Koppel-Moduln, deren Bus-Schnittstellen nur Filter und Konzentrator enthalten (Fig. 2), erforderlich. Zwischen den (Erweiterungs-) Stufen sind je Ausgang L Zwischenleitungen erforderlich. Die Größe von L hängt dabei von der auftretenden Verkehrslast und der geforderten Verlustwahrscheinlichkeit ab (z. B. ist L = 8 bei 90 % Verkehrslast und einer Paket-Verlustwahrscheinlichkeit von 10⁻⁶, vergl. Bild 5 in der genannten Druckschrift). Die Gesamtzahl der Leitungen zwischen zwei Koppel-Moduln beträgt damit N x L (Fig. 3).

Der vorliegenden Erfindung liegt die Aufgabe zugrunde, ein Koppelnetz der eingangs genannten Art zu schaffen, das ein Erweiterungskonzept bei stark verringerter Komplexität der Komponenten und erhöhter Anzahl der zu vermittelnden Leitungen gestattet.

Zur Lösung dieser Aufgabe wird ein Koppelnetz gemäß dem Oberbegriff des Patentanspruchs 1 vorgeschlagen, das durch die angegebenen kennzeichnenden Merkmale des Patentanspruchs 1 charakterisiert ist.

Vorteilhafte Weiterbildungen der Erfindung sind durch die in den Unteransprüchen angegebenen Merkmale gekennzeichnet.

Im folgenden wird die Erfindung anhand mehrerer Figuren beschrieben.
- Fig. 1: zeigt einen N x N Koppel-Modul nach dem Stand der Technik.
- Fig. 2: zeigt einen N x N Erweiterungs-Modul nach dem Stand der Technik.
- Fig. 3: zeigt ein Blockschaltbild, aus dem ein bekanntes Erweiterungskonzept hervorgeht.
- Fig. 4: zeigt einen Vorvermittlungs-Modul gemäß der Erfindung.
- Fig. 5: zeigt einen Endvermittlungs-Modul gemäß der Erfindung.
- Fig. 6: zeigt ein Blockschaltbild, aus dem das erfindungsgemäße Erweiterungskonzept hervorgeht.

Erfindungsgemäß wird ein ATM-Vermittlungsknoten vorgeschlagen, der eine einfache Erweiterbarkeit um Vielfache von N zuläßt, wobei N die Anzahl der Ein- und Ausgangsleitungen eines auf einem Chip integrierbaren Grundelements (Koppel-Modul) ist. Der Knoten ist logisch einstufig aufgebaut. Er zeichnet sich damit gegenüber mehrstufigen Anordnungen durch den Fortfall der aufwendigen internen Wegsuche aus. Der Aufwand zur Realisierung des Knoten steigt allerdings quadratisch mit der Anzahl der Anschlußleitungen.

Grundgedanke des erfindungsgemäßen Erweiterungskonzepts ist eine Aufteilung der Vermittlungsfunktion in zwei Stufen. Dementsprechend sind zwei unterschiedliche Koppel-Moduln erforderlich, die eine Vorvermittlung und eine Endvermittlung durchführen. An den Vorvermittlungs-Modul (Fig. 4) sind wie beim Stand der Technik N Eingangsleitungen angeschlossen. Filter am Eingang des Moduls selektieren diejenigen Pakete, die für einen der N Ausgänge bestimmt sind. Über einen Konzentrator und einen Shifter gelangen die Pakete in einen Speicher, der für alle N Ausgänge gemeinsam genutzt wird (Shared Buffer). Zusätzlich sind N Erweiterungseingänge vorgesehen, die an den Konzentrator angeschlossen sind, der somit eine Breite von 2N Leitungen aufweist. Das Auslesen des Speichers soll N-fach parallel erfolgen. Die N Ausgänge dieses Vorvermittlungs-Moduls führen entweder in die Erweiterungseingänge des nächsten Vorvermittlungs-Moduls oder - in der letzten Stufe - in die Eingänge des Endvermittlungs-Moduls.

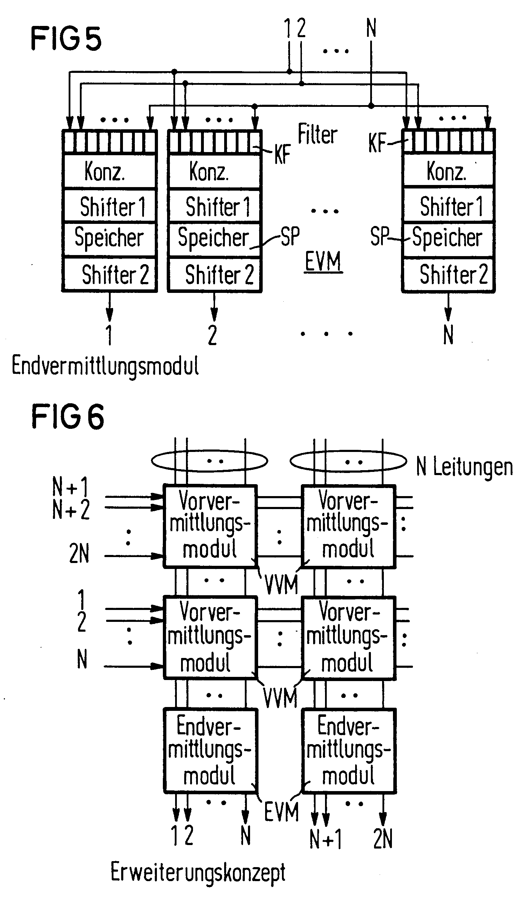

Der Endvermittlungs-Modul (Fig. 5) unterscheidet sich vom Grundkoppel-Modul des in der angegebenen Druckschrift beschriebenen Konzepts dadurch, daß daran keine Eingangsleitungen direkt angeschlossen sind. Er hat die Aufgabe, die Pakete, die für N Ausgänge ankommen, auf die einzelnen Ausgänge zu vermitteln. Dazu ist er ähnlich aufgebaut wie der Modul des bekannten Konzepts. Die Filter werten die lokale Adresse für die Ausgangsleitungen 1 bis N aus. Konzentrator, Shifter und Speicher erfüllen die gleichen Aufgaben wie in dem bekannten Konzept, unterscheiden sich jedoch im Aufwand.

Das Erweiterungskonzept der modifizierten Struktur ist in Fig. 6 dargestellt. Die Grundeinheit besteht aus einem Vor- und einem Endvermittlungs-Modul. Das System ist in Stufen von i*N für i = 2, 3 ... erweiterbar. Bei einem Ausbau von N auf 2N setzt man neben die Grundeinheit eine weitere Grundeinheit und darüber je einen Vorvermittlungs-Modul. Strukturbedingt ergibt sich ein Mehraufwand von einem Modul pro Spalte.

Im einzelnen ist erfindungsgemäß vorgesehen, daß statt des vollvermittelnden Erweiterungs-Moduls ein Vorvermittlungs-Modul VVM vorgesehen ist, wobei eine Vorvermittlung nur bezüglich der Matrixspalte, nicht jedoch bezüglich des Matrixausgangs durchgeführt wird. Die Anzahl der Erweiterungseingänge und die Anzahl der Erstausgänge des Vorvermittlungs-Moduls beträgt, nämlich N, derjenigen des Erweiterungs-Moduls, wobei dieser Modul einen einzigen FIFO-Speicher SP enthält, der 2N Pakete gleichzeitig einlesen und N Pakete gleichzeitig auslesen kann. Zur Vermeidung von sog. Paketüberholungen wird die zeitliche Reihenfolge von jeweils auf einer der N Ersteingangs-Leitungen eines Vorvermittlungs-Moduls eintreffenden Paketen fallweise durch eine räumliche Ordnung auf den N Erstausgangs-Leitungen des Vorvermittlungs-Moduls VVM ersetzt. Das Kopfinformations-Filter KF verarbeitet nur einen Teil der Kopfinformation zum Vermitteln der Pakete zu der betreffenden Koppel-Modulspalte. Statt des Grund-Moduls sind jeweils ein Vorvermittlungs-Modul VVM und ein Endvermittlungs-Modul EVM, der eine endgültige Vermittlung zu dem Matrixausgang durchführt, vorgesehen, wobei die Erstausgänge dieser Vorvermittlungs-Moduln VVM mit den betreffenden Eingängen der Endvermittlungs-Moduln EVM verbunden sind. Die Endvermittlungs-Moduln EVM haben keine Erweiterungseingänge und keine Erweiterungsausgänge. Das Kopfinformations-Filter KF des Endvermittlungs-Moduls EVM verarbeitet einen anderen Teil der Kopfinformation zum endgültigen Vermitteln auf einen Matrixausgang.

Die zeitliche Reihenfolge von Paketen, die in dem Fall verloren geht, in dem Pakete in einem einzigen Pakettakt aus dem Speicher SP des Vorvermittlungs-Moduls VVM ausgelesen werden, wird durch die räumliche Ordnung derart ersetzt, daß das zuerst in den Speicher eingelesene Paket über diejenige Erstausgangs-Leitung ausgegeben wird, die die höchste Priorität besitzt, d. h. diejenige Leitung, die in der nächsten betreffenden Zeile des Koppelnetzes vom Speicher des betreffenden Koppel-Moduls als erste von allen N Erweiterungseingangs-Leitungen abgearbeitet wird, das zweite Paket über die Erstausgangs-Leitung mit der zweithöchsten Priorität ausgegeben wird usf., wodurch die zeitliche Reihenfolge der Pakete wiedergewonnen wird.

Gemäß einem ersten Lösungsvorschlag wird die räumliche Ordnung mittels einer Verschiebeeinrichtung, die dem Speicher in dem betreffenden Koppel-Modul nachgeordnet ist, erzeugt. Gemäß einem zweiten Lösungsvorschlag wird die räumliche Ordnung mittels eines Mikroprozessors erzeugt. Gemäß einem dritten Lösungsvorschlag wird die räumliche Ordnung mittels eines PLA (Programmable Logic Array) erzeugt.

Die auf den Eingangsleitungen mit unterschiedlichen Paket-Phasen eintreffenden Pakete werden vor deren Bearbeitung in dem betreffenden Koppel-Modul in eine gemeinsame Paket-Phasenlage gebracht.

Die Zahl der Leitungen zwischen den Moduln reduziert sich wesentlich von N x L auf N. Dafür ist in dem Vorvermittlungs-Modul eine bestimmte Anzahl von Speicherplätzen vorzusehen, die jedoch nicht ins Gewicht fallen, da die Komplexität des Vorvermittlungs-Moduls im Vergleich zum Endvermittlungs-Modul wesentlich geringer ist. Die Ergebnisse des Vergleichs sind in der im folgenden gezeigten Tabelle für N = 16, L = 10 und die Ausbaustufe mit 256 Leitungen angegeben. Die Komplexität der Filter verringert sich um den Faktor 2 beim Endvermittlungs-Modul und um den Faktor 32 beim Vorvermittlungs-Modul. Der Aufwand für Konzentrator und Shifter reduziert sich um den Faktor 2.6 beim Endvermittlungs-Modul, um den Faktor 5 beim Vorvermittlungs-Modul (Die Komponentenbreite wirkt sich quadratisch auf den Aufwand aus!).

| | KO -Konzept | | Neues Konzept | |
|---|---|---|---|---|
| | Erweiterungsmodul | Grundmodul | Vorvermittlungsmodul | Endvermittlungsmodul |
| A. Ausgangsleitungen | 160 N x L | 16 N | 16 N | 16 N |
| B. Filter | 2048 bit | 2048 bit | 64 bit | 1024 bit |
| C. Konzentratorbreite | 26 (N-mal) | 26 (N-mal) | 32 | 16 (N-mal) |
| D. Shifterbreite | 0 | 26 (N-mal) | 32 | 16 (N-mal) |
| E. Speicher | 0 | S | < S/N | S |

Betrachtet man die einzelnen Moduln unter dem Gesichtspunkt einer Realisierung in CMOS-VLSI, so spielt die Komplexität der einzelnen Moduln eine wichtige Rolle. Um nämlich die Aufbaugröße des Koppelfeldes möglichst klein halten zu können, ist es erforderlich, die Zahl N der pro Modul zu vermittelnden Leitungen möglichst groß wählen zu können, also hoch zu integrieren. Die Aufbaugröße ist dann bestimmt durch die Komplexität der Schaltung, die auf einem Chip integriert werden kann. Mit der beschriebenen Erfindung ist es möglich, die Komplexität einzelner Komponenten bei gleicher Funktionalität wirksam zu reduzieren und damit die Zahl der pro Modul zu vermittelnden Leitungen zu erhöhen.

Die jeweils zweiten Verschiebeeinrichtungen oder Shifter 2 in dem Moduln VVM und EVM können vorteilhafterweise als Multiplexer ausgebildet sein, die jeweils einen ausgewählten ihrer Ausgänge aktivieren.

## Patentansprüche

1. Modular erweiterbares digitales einstufiges Koppelnetz in ATM (Asynchronous Transfer Mode) -Technik für eine schnelle paketvermittelte Informationsübertragung, mit zwei Typen von vollvermittelnden Koppel-Moduln, nämlich Grund- und Erweiterungs-Moduln, die jeweils mit einer Vielzahl N von Ersteingängen, einer Vielzahl N x L von Erweiterungseingängen, einer Vielzahl N bzw. N x L von Erstausgängen und einer Vielzahl N von Erweiterungsausgängen versehen sind, wobei die Koppel-Moduln matrixförmig derart angeordnet sind, daß in der letzten Zeile der Matrix ausschließlich Grund-Moduln und in allen vorhergehenden Zeilen ausschließlich Erweiterungs-Moduln angeordnet sind, wobei die Erweiterungsausgänge der Koppel-Moduln jeweils mit den Ersteingängen der Koppel-Moduln in der folgenden Spalte verbunden sind und die Erstausgänge der Erweiterungs-Moduln jeweils mit den Erweiterungseingängen der Koppel-Moduln in der folgenden Zeile verbunden sind, wobei die Koppel-Moduln jeweils ersteingangsseitig zum Zwecke einer Wegauswahl ein Kopfinformations-Filter aufweisen und die Grund-Moduln jeweils eine Speicherfunktion (FIFO = First In/First Out) enthalten,
**dadurch gekennzeichnet,** daß statt des vollvermittelnden Erweiterungs-Moduls ein Vorvermittlungs-Modul (VVM) vorgesehen ist, wobei eine Vorvermittlung nur bezüglich der Matrixspalte, nicht jedoch bezüglich des Matrixausgangs durchgeführt wird und die Anzahl der Erweiterungseingänge und die Anzahl der Erstausgänge des Vorvermittlungs-Moduls, nämlich N, derjenigen des Erweiterungs-Moduls beträgt, wobei dieser Modul einen einzigen FIFO-Speicher (SP) enthält, der 2N Pakete gleichzeitig einlesen und N Pakete gleichzeitig auslesen kann, wobei zur Vermeidung von sog. Paketüberholungen die zeitliche Reihenfolge von jeweils auf einer der N Ersteingangs-Leitungen eines Vorvermittlungs-Moduls eintreffenden Paketen fallweise durch eine räumliche Ordnung auf den N Erstausgangs-Leitungen des Vorvermittlungs-Moduls (VVM) ersetzt wird, daß das Kopfinformations-Filter (KF) nur einen Teil der Kopfinformation zum Vermitteln der Pakete zu der betreffenden Koppel-Modulspalte verarbeitet, daß statt des Grund-Moduls jeweils ein Vorvermittlungs-Modul (VVM) und ein Endvermittlungs-Modul (EVM), der eine endgültige Vermittlung zu dem Matrixausgang durchführt, vorgesehen sind, wobei die Erstausgänge dieser Vorvermittlungs-Moduln (VVM) mit den betreffenden Eingängen der Endvermittlungs-Moduln (EVM) verbunden sind, daß die Endvermittlungs-Moduln (EVM) keine Erweiterungseingänge und keine Erweiterungsausgänge haben und daß das Kopfinformations-Filter (KF) des Endvermittlungs-Moduls (EVM) einen anderen Teil der Kopfinformation zum endgültigen Vermitteln auf einen Matrixausgang verarbeitet.

2. Koppelnetz nach Anspruch 1,
**dadurch gekennzeichnet,** daß die zeitliche Reihenfolge von Paketen, die in dem Fall verloren geht, in dem Pakete in einem einzigen Pakettakt aus dem Speicher (SP) des Vorvermittlungs-Moduls (VVM) ausgelesen werden, durch die räumliche Ordnung derart ersetzt wird, daß das zuerst in den Speicher eingelesene Paket über diejenige Erstausgangs-Leitung ausgegeben wird, die die höchste Priorität besitzt, d. h. diejenige Leitung, die in der nächsten betreffenden Zeile des Koppelnetzes vom Speicher des betreffenden Koppel-Moduls als erste von allen N Erweiterungseingangs-Leitungen abgearbeitet wird, das zweite Paket über die Erstausgangs-Leitung mit der zweithöchsten Priorität ausgegeben wird usf., wodurch die zeitliche Reihenfolge der Pakete wiedergewonnen wird.

3. Koppelnetz nach Anspruch 2,
**dadurch gekennzeichnet,** daß die räumliche Ordnung mittels einer Verschiebeeinrichtung, die dem Speicher in dem betreffenden Koppel-Modul nachgeordnet ist, erzeugt wird.

4. Koppelnetz nach Anspruch 2,
**dadurch gekennzeichnet,** daß die räumliche Ordnung mittels eines Mikroprozessors erzeugt wird.

5. Koppelnetz nach Anspruch 2,
**dadurch gekennzeichnet,** daß die räumliche Ordnung mittels eines PLA (Programmable Logic Array) erzeugt wird.

6. Koppelnetz nach Anspruch 1,
**dadurch gekennzeichnet,** daß die auf den Eingangsleitungen mit unterschiedlichen Paket-Phasen eintreffenden Pakete vor deren Bearbeitung in dem betreffenden Koppel-Modul in eine gemeinsame Paket-Phasenlage gebracht werden.

## Claims

1. Modular expandable digital single-stage switching network in ATM (Asynchronous Transfer Mode) technology for high-speed packet-switched information transfer, having two types of fully-switching switching modules, namely basic and expansion modules, which are provided in each case with a plurality N of first inputs, a plurality N x L of expansion inputs, a plurality N or N x L of first outputs and a plurality N of expansion outputs, in which the switching modules are arranged in the form of a matrix in such a way that solely basic modules are arranged in the last row of the matrix and solely expansion modules are arranged in all preceding rows, in which the expansion outputs of the switching modules are connected in each case to the first inputs of the switching modules in the following column and the first outputs of the expansion modules are connected in each case to the expansion inputs of the switching modules in the following row, in which the switching modules have in each case on the first input side a header information filter for the purpose of route selection and the basic modules contain a storage function (FIFO = First In/First Out) in each case, characterized in that instead of the fully switching expansion module, a pre-switching module (VVM) is provided, in which a pre-switching is performed only with respect to the matrix column, but not with respect to the matrix output, and the number of expansion inputs and the number of first outputs of the pre-switching module is namely N of those of the expansion module, in which said module contains a single FIFO memory (SP) which can read in 2N packets simultaneously and read out N packets simultaneously, in which, to avoid so-called packet overtaking, the chronological sequence of packets arriving in each case on one of the N first input lines of a pre-switching module is replaced from case to case by a spatial ordering on the N first output lines of the pre-switching module (VVM), in that the header information filter (KF) processes only a part of the header information for switching the packets to the respective switching module column, in that instead of the basic module a pre-switching module (VVM) and a final switching module (EVM) which performs a final switching to the matrix output are provided in each case, in which the first outputs of said pre-switching modules (VVM) are connected to the corresponding inputs of the final switching modules (EVM), in that the final switching modules (EVM) have no expansion inputs and no expansion outputs, and in that the header information filter (KF) of the final switching module (EVM) processes a different part of the header information for the final switching to a matrix output.

2. Switching network according to Claim 1, characterized in that the chronological sequence of packets, which is lost in the case where packets are read out of the store (SP) of the pre-switching module (VVM) in a single packet cycle, is replaced by the spatial ordering in such a way that the packet read into the store first is output via the first output line having the highest priority, that is to say the line which is processed in the next respective row of the switching network by the store of the respective switching module as the first of all N expansion input lines, the second packet is output via the first output line having the second-highest priority, and so forth, as a result of which the chronological sequence of the packets is restored.

3. Switching network according to Claim 2, characterized in that the spatial ordering is generated by means of a shifting device following the store in the respective switching module.

4. Switching network according to Claim 2, characterized in that the spatial ordering is generated by means of a microprocessor.

5. Switching network according to Claim 2, characterized in that the spatial ordering is generated by means of a PLA (Programmable Logic Array).

6. Switching network according to Claim 1, characterized in that the packets arriving on the input lines with different packet phases are brought into a common packet phase position before being processed in the respective switching module.

## Revendications

1. Réseau de couplage numérique à un étage, pouvant être étendu de façon modulaire, réalisé selon la technique ATM (Asynchronous Transfer Mode), pour une transmission rapide d'informations à commutation de paquets, comportant deux types de modules de couplage réalisant une commutation complète, à savoir des modules de base et des modules d'extension, qui sont équipés chacun d'une multiplicité M de premières entrées, d'une multiplicité N x L d'entrées d'extension, d'une multiplicité N ou N x L de premières sorties et d'une multiplicité N de sorties d'extension, et dans lequel les modules de couplage sont disposés sous forme matricielle de telle sorte que exclusivement des modules de base sont disposés dans la dernière ligne de la matrice et exclusivement des modules d'extension sont disposés dans toutes les lignes précédentes, et dans lequel les sorties d'extension des modules de couplage sont connectés respectivement à des premières entrées des modules de couplage, dans la colonne suivante, et les premières sorties des modules d'extension sont connectées respectivement aux entrées d'extension des modules de couplage dans la ligne suivante, et dans lequel les modules de couplage possèdent respectivement, du côté de leurs premières entrées, un filtre d'informations de tête pour réaliser une sélection de voies d'acheminement, et les modules de base contiennent respectivement une fonction de mémoire (FIFO = First In/First Out),
caractérisé par le fait qu'à la place du module d'extension réalisant une commutation complète, il est prévu un module de commutation préalable (VVM), une commutation préalable étant exécutée uniquement en rapport avec les colonnes de la matrice, mais pas en rapport avec la sortie de la matrice, et le nombre des entrées d'extension et le nombre des premières sorties du module de commutation préalable étant égaux à N, à savoir le nombre des éléments correspondants du module d'extension, et ce module contenant une mémoire FIFO (SP) unique, dans laquelle on peut mémoriser simultanément 2N paquets et lire simultanément N paquets, auquel cas pour éviter ce qu'on appelle des régénérations de paquets, la séquence temporelle de paquets arrivant respectivement à l'une des N lignes des premières entrées d'un module de commutation préalable, est remplacée le cas échéant par une association spatiale aux N lignes des premières sorties du module de commutation préalable (VVM), que le filtre d'informations de tête (KF) ne traite qu'une partie de l'information de tête pour la commutation des paquets vers les colonnes concernées du module de couplage, qu'à la place du module de base, il est prévu respectivement un module de commutation préalable (VVM) et un module de commutation finale (EVM), qui exécute une commutation finale en direction de la sortie de la matrice, les premières sorties de ces modules de commutation préalable (VVM) étant connectées aux entrées correspondantes des modules de commutation finale (EVM), que les modules de commutation finale (EVM) n'ont aucune entrée d'extension et aucune sortie d'extension et que le filtre d'informations de tête (KF) du module de commutation finale (EVM) traite une autre partie de l'information de tête en vue de la commutation finale sur une sortie de la matrice.

2. Réseau de couplage suivant la revendication 1, caractérisé par le fait que la séquence temporelle de paquets, qui est perdue dans le cas où des paquets sont lus à une cadence unique de paquets à partir de la mémoire (SP) du module de commutation préalable (VVM), est remplacée par l'association spatiale de telle sorte que le paquet mémorisé en premier dans la mémoire est délivré par l'intermédiaire de la ligne d'une première sortie, qui possède la priorité la plus élevée, c'est-à-dire de la ligne qui est traitée, dans la ligne immédiatement suivante considérée du réseau de couplage, par la mémoire du module de couplage concerné, en tant que première de l'ensemble des N lignes des entrées d'extension, que le second paquet est délivré par l'intermédiaire de la ligne de la première sortie possédant la priorité la plus élevée en second, etc., ce qui permet de récupérer la séquence temporelle des paquets.

3. Réseau de couplage suivant la revendication 2, caractérisé par le fait que l'association spatiale est produite au moyen d'un dispositif de transfert, qui est branché en aval de la mémoire dans le module de couplage considéré.

4. Réseau de couplage suivant la revendication 2, caractérisé par le fait que l'association spatiale est réalisée au moyen d'un microprocesseur.

5. Réseau de couplage suivant la revendication 2, caractérisé par le fait que l'association spatiale est réalisée au moyen d'un réseau PLA (Programmable Logic Array).

6. Réseau de couplage suivant la revendication 1, caractérisé par le fait que les paquets, qui arrivent avec des phases différentes dans les lignes d'entrée, sont amenés dans une position de phase commune avant leur traitement dans le module de couplage considéré.
